# EUROPEAN PATENT APPLICATION

(11) **EP 4 301 034 A1**
(43) Date of publication of application: **03.01.2024**
(21) Application number: 22182436.0
(22) Date of filing: 30.06.2022
(51) Int. Cl.: H04W 28/08, H04L 43/12, H04W 24/02, H04W 24/06

(54) **METHOD OF OPERATING A TELECOMMUNICATIONS NETWORK**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method (200) of operating a hybrid access telecommunications network (100), said telecommunications network comprising a client device (110) and a core network (130) connected therebetween via a plurality of network paths, each network path being established by a different access network (120), the method comprising the steps of: sending (210) and then receiving (220), over each of the plurality of network paths, a lightweight packet train between the client device and the core network; measuring dispersion of each received packet train; determining a relative network performance of the plurality of network paths using said measured dispersions (230); and configuring the telecommunications network so as to send subsequent network communications between the client device and the core network over the plurality of network paths in dependence on the determined relative network performance of the plurality of network paths (250).

## Description

### Field of Invention

The present invention relates to a method of operating a telecommunications network, and in particular for testing and configuring a hybrid access network.

### Background

A networked device, such as user equipment or an access point, may connect to a telecommunications network by simultaneously using a plurality of distinct access networks; this may typically be referred to as *"hybrid access".* For example, the networked device may be in the form of a smartphone that connects to, and simultaneously uses, cellular (e.g. LTE) and non-cellular (e.g. fixed-) access networks. In this way, the networked device is able to improve network access by having the combined throughput of the two access networks.

However, hybrid access requires complex and resource-intensive management, not least to ensure appropriate distribution of communications over the plurality of distinct access networks. Such management is typically informed by performing diagnostics on the connections between the access networks and the networked device. In the case of MultiPath TCP (MP-TCP), a process of Additive Increase Multiplicative Decrease (AIMD) is used to optimise hybrid access routing, which requires gradually adjusting transmission rates to determine an optimum value; this is therefore a relatively time and resource-intensive process.

For large-scale networks, performing diagnostics to facilitate effective hybrid access communication therefore requires significant processing resources, constraining the extent to which effective and efficient hybrid access can be provided at scale using existing methods.

It is an aim of the present invention to alleviate at least the aforementioned problem.

### Statements of Invention

According to a first aspect of the present invention, there is provided: a method of operating a hybrid access telecommunications network, said telecommunications network comprising a client device and a core network connected therebetween via a plurality of network paths, each network path being established by a different access network, the method comprising the steps of: sending and then receiving, over each of the plurality of network paths, a lightweight packet train between the client device and the core network; measuring dispersion of each received packet train; determining a relative network performance of the plurality of network paths using said measured dispersions; and configuring the telecommunications network so as to send subsequent network communications between the client device and the core network over the plurality of network paths in dependence on the determined relative network performance of the plurality of network paths.

As used herein, the term "lightweight" in the context of the packet train, preferably connotes: packets of the packet train being identical or substantially identical in size and/or form; the packet train comprising at least two packets, and preferably no more than 100 packets, more preferably fewer than 50 packets, and still more preferably fewer than 20 packets; the packet train being no more than 7MB, preferably no more than 1Mb, still more preferably less than 250kb, yet more preferably less than 50kb, and more preferably still less than 10kb; and/or utilising (only) a lightweight, and more preferably a connectionless, protocol, and still more preferably a User Datagram Protocol (UDP) or Real-time Transport Protocol (RTP).

Preferably, the method is performed in response to: initialisation of a new hybrid access connection, thereby to inform starting conditions for such a connection; and/or a change in the plurality of network paths. Optionally, sending each lightweight packet train is performed sequentially or simultaneously over each of the plurality of network paths. Optionally, the step/s of measuring the dispersion and/or determining the relative network performance is/are performed by a recipient of the lightweight packet trains. Optionally, the step of configuring the telecommunications network comprises changing hybrid access network path routing instructions for the client device and/or core network. Preferably, the two different access networks are different as to access technology and/or ownership.

Preferably, configuring the telecommunications network comprises dividing subsequent hybrid access network communications over each network path in proportion to the relative network performance of each network path. Preferably, said subsequent hybrid access network communications are divided as to data volume, number of packets, number of flows and/or number of sub-flows. Optionally, subsequent hybrid access network communications are divided across each network path at the level of individual packets, sub-flows or flows.

Preferably, configuring the telecommunications network comprises confining a data type of the subsequent network communications to one of the network paths in dependence upon the relative network performance of said path. Preferably, a higher-requirement data flow and/or type is sent to the network path having the better network performance and/or a lower-requirement data flow and/or type is sent to the network path having the worse network performance.

Preferably, the method further comprising the step of, after configuring the telecommunications network, using the configuration thus achieved as starting conditions for a connection-orientated protocol for subsequent hybrid access network communications using the plurality of network paths. Preferably, said connection-orientated protocol is a Transport Control Protocol, TCP, and is more preferably MultiPath TCP.

Preferably, at least one of the steps is performed by the client device and/or core network. Optionally, the method further comprises the step of one of the client device or the core network communicating to the other the measured network performance and/or the generated routing instructions. Optionally, said communicating is performed using only a single data packet and/or using only a single one of the plurality of different network paths. Optionally, all of the steps are performed by the client device and/or the core network.

Preferably, configuring the telecommunications network is further performed in dependence upon a resource consumption value of using the network paths, and more preferably, so as to minimise said resource consumption value and/or optimise performance of communication versus the resource consumption value

Preferably, configuring the telecommunications network is further performed in dependence upon a prioritised sequence of utilisation of each the plurality of network paths.

Preferably, configuring the telecommunications network is further performed in dependence upon a threshold level of utilisation of each the plurality of network paths.

Preferably, the determined relative network performance comprises a measurement of: bandwidth; latency; and/or jitter.

Preferably, the at least two network paths comprise a: wide area wireless network; and wide area fixed access network. Optionally, the wide area wireless network is a cellular network, and may be a Long-Term Evolution (LTE) network, and/or a satellite network. Optionally, the wide area fixed-access network comprises a Digital Subscriber Line (xDSL).

Preferably, the core network comprises a Software Defined Network, SDN, controller and/or an Access Traffic Steering, Switching & Splitting, ATSSS, function, and wherein said SDN controller and/or ATSSS function perform/s at least one of the steps of the methods described above. Optionally, the SDN controller is a Hybrid Access Gateway, HAG.

Preferably, the client device is a/an: access point for the hybrid access telecommunications network; User Equipment, UE; or an Internet of Things, loT, device.

Preferably, each lightweight packet train consists only of User Datagram Protocol, UDP, or Real-Time Protocol, RTP, packets.

According to another aspect of the invention, there is provided a computer-readable carrier medium comprising a computer program, which, when the computer program is executed by a computer, causes the computer to carry out the methods as described above.

According to another aspect of the invention, there is provided a hybrid access telecommunications network comprising: a client device; a core network, wherein said client device and the core network are connected therebetween via a plurality of network paths, each network path being established by a different access network; a transmitter for sending and then receiving, over each of the plurality of network paths, a lightweight packet train between the client device and the core network; a processor configured to: measure dispersion of each received packet train; determining a relative network performance of the plurality of network paths using said measured dispersions; and configure the telecommunications network so as to send subsequent network communications between the client device and the core network over the plurality of network paths in dependence on the determined relative network performance of the plurality of network paths.

Optionally, sending and receiving the lightweight packet train comprises roundtrip communication of the lightweight packet train between the client device and the core network. Preferably, the packet train comprises at least two serial packets. Preferably, each packet of the packet train is sent serially without delay, and more preferably at the highest rate of transmission available. Optionally, the core network comprises an edge compute node, and wherein said edge compute node performs at least one of the steps of the methods described above.

The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a method of operating a telecommunications network, and to a telecommunications network, as described herein and/or substantially as illustrated with reference to the accompanying drawings. The present invention is now described, purely by way of example, with reference to the accompanying diagrammatic drawings, in which:
Figure 1 shows an exemplary telecommunications network; and
Figure 2 shows a method of operating the telecommunications network.

### Specific Description

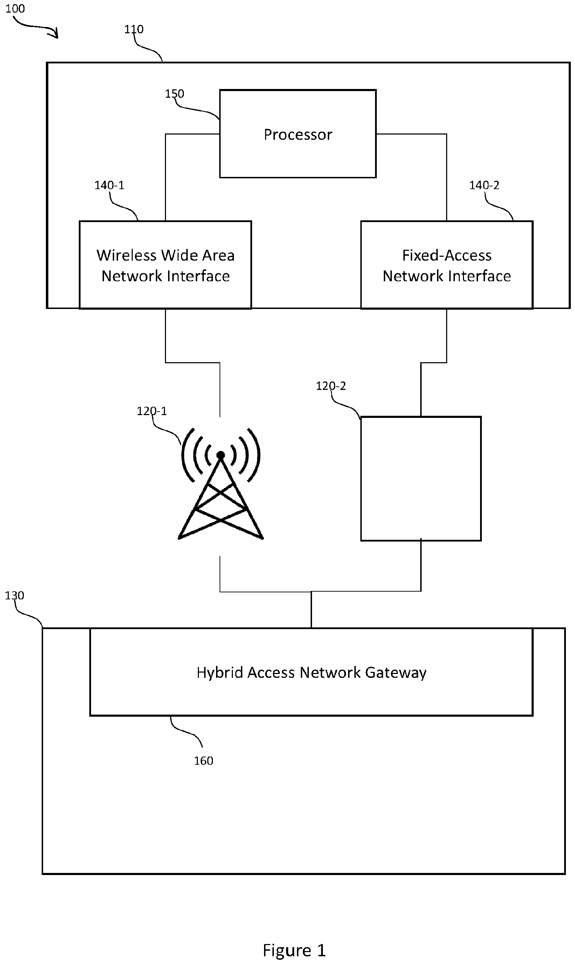

Figure 1 shows an exemplary telecommunications network 100 in the form of a hybrid access network comprising a/an: client device 110; plurality of wide area access networks 120; and a core network 130.

The client device 110 is, for example, in the form of an end-user network device (e.g. a mobile or an Internet of Things (loT) device) or an access point for providing onward communication to an end user device (e.g. a wireless local area network access point).

The plurality of wide area access networks 120 interconnect the client device and the core network so as to facilitate data communication therebetween. Each constituent access network is a distinct type of access network (*e.g*. as to technology and/or ownership). Each wide area access network therefore provides a different network path for communications between the client device and the core network. In the example of Figure 1, the plurality of wide area access networks 120 comprises two forms of access network, a: wireless wide area access network 120-1; and fixed-access wide area network 120-2.

For the client device 110 to access each of the plurality of wide area access networks 120, the client device comprises a plurality of corresponding network interfaces 140. In the example of Figure 1, the plurality of corresponding network interfaces 140 therefore comprises a: wireless wide area network interface 140-1 (for accessing network 120-1); and fixed-access wide area network interface 140-2 (for accessing network 120-2). The client device further comprises a processor 150 that is in communication with each of the network interfaces 140 and is configured to provide hybrid access capability to the client device (*i.e*. client-side).

In more detail, the wireless wide area access network 120-1 forms part of, for example, a Long Term Evolution (LTE) cellular telecommunications network, and is in the form of a radio access network, and in particular in accordance with 4G and/or 5G standards under the 3GPP^{RTM}. The wide area fixed-access network 120-2 is in the form of, for example, a copper and/or fibre optic distribution network.

The core network 130 is configured to control operation of the plurality of wide area access networks 120, authenticate the client device, and to interface with wider data networks (not shown) beyond that of telecommunications network 100, such as the Internet. In the example of Figure 1, the core network 130 is in the form of a converged fixed-access and cellular telecommunications network, and in particular as defined in 4G and/or 5G standards under the 3GPP^{RTM}.

As part of the core network 130, there is provided a Hybrid Access Gateway (HAG) 160, which is a logical function that is configured to communicate with each of the plurality of wide area access networks 120 and to provide hybrid access capability to the core network (i.e. network-side).

The telecommunications network 100 is configured such that the client device 110 and the core network 130 are available to communicate therebetween by simultaneously using the two different network paths as provided by the two wide area access networks 120. As such, transmitted data is configured to be split (by the client device and/or the HAG) across each of the network paths. The dividing of such transmitted data is available to be performed at the level of individual data packets, flows and/or sub-flows. A receiving entity (i.e. the client device and/or the HAG) is subsequently configured to recombine data as received via each network path so as to reconstitute the original data.

It will be appreciated that that the telecommunications network 100, as shown in Figure 1, comprises further features, as are known in the art, which have been omitted for conciseness.

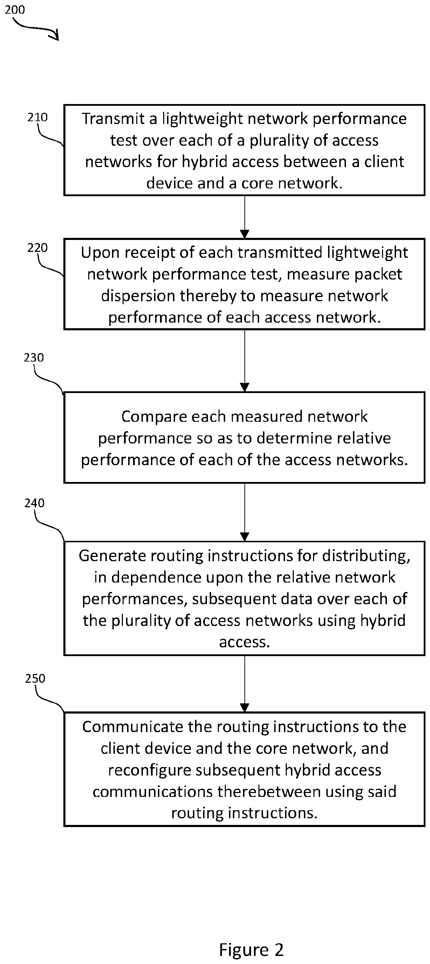

Figure 2 shows a process 200 in which the telecommunications network 100 measures network performance of each of the network paths using a lightweight network performance test, and in turn configures routing of data, via each network path for hybrid access communication, in dependence upon network performance as measured using said lightweight test.

At a first step 210, the HAG 160 initiates a lightweight network performance test for each of the network paths for establishing hybrid access communications between the client device and the core network; that is, the plurality of access networks 120. To do so, in one example, the HAG sends a lightweight packet train to the client device 110 over each access network 120. The packet train is pre-defined, such that the characteristics (e.g. nature, form and/or size) of the packet train are known to both the HAG and the client device.

The lightweight packet train is "lightweight" in the sense of: data volume; data processing requirements; and/or test duration. To help ensure such a "lightweight" nature, the constituent packets of the packet train are: identical; few (*e.g.* at least two packets, but fewer than 100, and optionally fewer than 20); each small in size (*e.g.* no more than 64kB, optionally less than 20kB, and alternatively less than 3kB); and/or utilise a lightweight (e.g. connectionless) protocol, such as a User Datagram Protocol (UDP) or Real-time Transport Protocol (RTP). The lightweight packet train may be contrasted with conventional network performance tests, such as the Transmission Control Protocol-based speed tests provided by *Ookla* (accessible at *https:*//*www.speedtest.net*) or *Samknows* (accessible at *https:*//*samknows.com*/*realspeed*), which require a larger volume of data and a connection-orientated protocol.

At a second step 220, upon receipt at the client device 110 (specifically, at each network interface 140) of the packet trains from each network path, the client device performs, by means of the processor 150, and as part of the lightweight network performance test, a packet dispersion test, in which dispersion of sequential packets within each packet train is measured *(*i.e. the temporal separation, at receipt, of each serial packet in each packet train). The dispersion test is, for example, available to be performed as disclosed in *Dovrolis, Constantine* & *Ramanathan, Parameswaran* & *Moore, David; "Packet Dispersion Techniques and Capacity Estimation" (IEEE*/*ACM Transactions on Networking* - *TON; 2001),* the contents of which are herein incorporated by reference.

The dispersion test may be used to determine, or at least estimate, network performance of a network path over which a packet train is communicated. The client device is configured to process the results of the dispersion tests for each network path, thereby to determine network performance characteristics of each network path. In particular, such network performance characteristics include capacity, latency and/or jitter.

At a next step 230, having measured network performance of each of the network paths, the processor 150 compares the measurements for each network path so as to determine the relative network performance of each network path. In a specific example of step 230, the client device measures bandwidths of 2Mb/s and 4Mb/s for fixed-access 120-2 and cellular 120-1 networks respectively.

At subsequent step 240, using the determined relative network performance of each network path, the processor 150 generates routing instructions for communicating data over each network path using hybrid access. The routing instructions specify what type of data and/or what proportion of data is to be communicated over each network path using hybrid access, and the relative network performance informs which specific access network 120 is responsible for a given type of data, flow and/or sub-slow and/or the relative share of data to be communicated over each access network 120. In a specific example of step 240, the client device generates routing instructions that twice the volume of data is to be communicated using the cellular network 120-1 than using the fixed-access network 120-2, because of the cellular network 120-1 having twice the bandwidth of the fixed-access network 120-2. In this way, the loading of each access network 120 is balanced relative to ratio of network performance of each corresponding network path.

At a final step 250, the routing instructions are communicated to the client device 110 (*i.e.* in this example, as a direct output from the processor 150) and the HAG 160 (*i.e.* in this example, from the client device, via any of the plurality of wide area access networks 120).

Upon receipt of the routing instructions, the client device 110 and HAG 160 execute the routing instructions so as to reconfigure subsequent routing of hybrid access network communications therebetween in accordance with the routing instructions. In the aforementioned specific example of steps 230 and 240, the client device and HAG are therefore configured to divide data communicated therebetween so that the ratio of data sent over the cellular network 120-1 compared to the fixed-access network 120-2 is two-to-one, respectively.

In one example, process 200 is initiated in response to first establishing, or seeking to establish, a hybrid access network connection between the client device 110 and the core network 130. In this way, process 200 allows for hybrid access communication to be initiated with upfront knowledge of network performance across each network path; this may be contrasted with, for example, purely using MultiPath Transmission Control Protocol (MP-TCP), which at start-up is devoid of information about the network performance of each network path. MP-TCP must instead gradually build-up and assess transmission rates over each network path so as to settle upon optimal transmission rates. In comparison, performing process 200 at initialisation of a hybrid access connection may therefore allow for faster determination of network performance across the network paths and the lightweight nature of the network performance test may be more resource-efficient.

The output of process 200, having initiated hybrid access communicating based on performance-based routing instructions, may subsequently be used to augment protocols for ongoing hybrid access communication, such as MP-TCP, by informing, at or close to initialisation of communication, starting configurations for data transmission that more optimally reflect the capabilities of each network path.

After step 250, process 200 is available to re-iterate to step 210, for example after a pre-defined condition is met, such as a/an: expiry of a pre-defined period of time; change in network paths; and/or change in a characteristic of data being communicated (e.g. a change in flows, type and/or volume of data). Since process 200 uses a lightweight network performance test, process 200 may be performed at a greater frequency than protocols that require more resource-intensive path optimisation processes, such as MP-TCP.

### Alternatives and Modifications

In one alternative, the entities responsible for at least some of the steps of process 200 are available to be reversed between the client device 110 and the core network (and specifically the HAG 160) to that described above, such that the client device transmits the packet train to the HAG, the HAG measures network performance and/or the HAG generates the routing instructions.

In an alternative, process 200 is performed such that each of the client device and the HAG transmit (simultaneously or sequentially) packet trains to one another as part of the lightweight network performance testing.

In an alternative, the lightweight packet train is sent for a roundtrip so as to be returned to the same entity that originally transmitted the lightweight packet train, wherein such entity therefore subsequently measures roundtrip network performance.

In an alternative example, the measured relative network performance is one of a plurality of factors that are used at step 240 to generate the routing instructions and therefore the distribution of data over the network paths, such further factors include:
1. capping a resource cost of using a given network path (e.g. the volume of data distributed using the cellular access network is capped);
2. confinement of data flows to a given access network (*e.g*. long-running flows are biased away from being re-distributed to another network path, whilst new flows are placed onto an under-utilised network path, such that load balancing is achieved over a longer timescale than the traditional packet-by-packet load balancing of Multipath TCP, but with the advantage that the load balancer is potentially simpler to implement, since it does not have to spread and recombine packets);
3. prioritisation, and/or or threshold utilisation, of a network path (*e.g.* fixed-access utilisation first, then cellular);
4. limiting a frequency of effecting new routing instructions, for example by requiring a threshold change in progressive relative network performance that must be surmounted to change routing instructions; and/or
5. dependencies with other on-going features of the telecommunications network 100, such as two access networks 120 having a known inter-dependency (*e.g*. where the access networks are cellular networks in a RAN-share arrangement);

In an alternative example, at step 240, the generated routing instructions are an instruction to divide different data types between each of the access networks 120 based on relative measured latencies for each network path. For example, video and audio may be communicated over the cellular 120-1 and fixed-access 120-2 network paths, respectively, based on the latency of the former being lower than the latter and video being more sensitive to latency.

In an alternative, the telecommunications network is available to comprise at least three distinct access networks, each of which are used for hybrid access. In this case, process 200 is performed for all of the access networks so as to measure network performance and distribute data over each of the at least three access networks in dependence upon said measured network performance.

In an alternative, the plurality of access networks 120 for hybrid access comprise, alternatively or additionally, any kind of telecommunications network, including a: wireless local area network; satellite network; and/or a combination of network types (or a 'HetNet').

Aforementioned functions of the HAG are additionally or alternatively performed by further components of the core network, such as an Access Traffic Steering, Switching & Splitting (ATSSS) function.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a hybrid access telecommunications network, said telecommunications network comprising a client device and a core network connected therebetween via a plurality of network paths, each network path being established by a different access network, the method comprising the steps of:
sending and then receiving, over each of the plurality of network paths, a lightweight packet train between the client device and the core network;
measuring dispersion of each received packet train;
determining a relative network performance of the plurality of network paths using said measured dispersions; and
configuring the telecommunications network so as to send subsequent network communications between the client device and the core network over the plurality of network paths in dependence on the determined relative network performance of the plurality of network paths.

2. A method according to Claim 1, wherein configuring the telecommunications network comprises dividing subsequent hybrid access network communications over each network path in proportion to the relative network performance of each network path.

3. A method according to any preceding claim, wherein configuring the telecommunications network comprises confining a data type of the subsequent network communications to one of the network paths in dependence upon the relative network performance of said path.

4. A method according to any preceding claim, further comprising the step of, after configuring the telecommunications network, using the configuration thus achieved as starting conditions for a connection-orientated protocol for subsequent hybrid access network communications using the plurality of network paths.

5. A method according to any preceding claim, wherein at least one of the steps is performed by the client device and/or core network.

6. A method according to any preceding claim, wherein configuring the telecommunications network is further performed in dependence upon a resource consumption value of using the network paths.

7. A method according to any preceding claim, wherein configuring the telecommunications network is further performed in dependence upon a prioritised sequence of utilisation of each the plurality of network paths.

8. A method according to any preceding claim, wherein configuring the telecommunications network is further performed in dependence upon a threshold level of utilisation of each the plurality of network paths.

9. A method according to any preceding claim, wherein the determined relative network performance comprises a measurement of: bandwidth; latency; and/or jitter.

10. A method according to any preceding claim, wherein the at least two network paths comprise a: wide area wireless network; and wide area fixed access network.

11. A method according to any preceding claim, wherein the core network comprises a Software Defined Network, SDN, controller and/or an Access Traffic Steering, Switching & Splitting, ATSSS, function, and wherein said SDN controller and/or ATSSS function perform/s at least one of the steps of the preceding claims.

12. A method according to any preceding claim, wherein the client device is a/an: access point for the hybrid access telecommunications network; User Equipment, UE; or an Internet of Things, loT, device.

13. A method according to any preceding claim, wherein each lightweight packet train consists only of User Datagram Protocol, UDP, or Real-Time Protocol, RTP, packets.

14. A computer-readable carrier medium comprising a computer program, which, when the computer program is executed by a computer, causes the computer to carry out the steps of any one of the preceding claims.

15. A hybrid access telecommunications network comprising:
a client device;
a core network, wherein said client device and the core network are connected therebetween via a plurality of network paths, each network path being established by a different access network;
a transmitter for sending and then receiving, over each of the plurality of network paths, a lightweight packet train between the client device and the core network;
a processor configured to:
measure dispersion of each received packet train;
determining a relative network performance of the plurality of network paths using said measured dispersions; and
configure the telecommunications network so as to send subsequent network communications between the client device and the core network over the plurality of network paths in dependence on the determined relative network performance of the plurality of network paths.
